# EUROPÄISCHE PATENTANMELDUNG

(11) **EP 2 014 830 A1**
(43) Veröffentlichungstag der Anmeldung: **14.01.2009**
(21) Anmeldenummer: 07110917.7
(22) Anmeldetag: 22.06.2007
(51) Int. Cl.: D21H 19/38, C01F 11/18, C09C 1/02, D21H 21/52

(54) **Herstellung von Streichfarbendispersionen**

(71) Anmelder: Alpha Calcit Füllstoff Gesellschaft mbH, 50997 Köln (DE)
(72) Erfinder: Münchow, Dieter, 50996 Köln (DE)
(74) Vertreter: Jönsson, Hans-Peter

(57) **Zusammenfassung**

Die vorliegende Anmeldung betrifft ein Verfahren zur Herstellung von Streichfarbendispersionen zum Einsatz in der Papierindustrie durch Covermahlung von natürlichem Calciumcarbonat (GCC) und präzipitiertem Calciumcarbonat (PCC), das dadurch gekennzeichnet ist, dass man pulverförmiges GCC mit einer 5 bis 80 Gew. % PCC enthaltenden Slurry zu einer Teilchengrößenverteilung des Calciumcarbonats von wenigstens 90 Gew. % kleiner 5 µm, wenigstens 70 Gew. % kleiner 2 µm und wenigstens 20 Gew. % kleiner 1 µm mit einem Gewichtsmittel der Teilchengrößen im Bereich von 0,7 bis 3 µm covermahlt.

## Beschreibung

Gegenstand der Erfindung ist ein Verfahren zur Herstellung von Streichfarbendispersionen zum Einsatz in der Papierindustrie durch Covermahlung von natürlichem Calciumcarbonat (GCC) und präzipitiertem Calciumcarbonat (PCC), die so erhältlichen Streichfarbendispersionen sowie die Verwendung der Streichfarbendispersionen zur Herstellung von Streichfarben.

WO 98/01621 beschreibt ein Verfahren zur Wiederverwertung von Füllstoffen und Streichpigmenten der Papier-, Pappe- und Kartonherstellung. Gegenstand der Druckschrift ist ein Verfahren zur Wiederverwertung von Füllstoffen und Streichpigmenten der Papier-, Pappe- und Kartonherstellung aus den Restwasserschlämmen der Streichereiabwässer, Deinkinganlagen, innerbetrieblichern Kläranlagen oder Abscheidevorrichtungen sowie die Verwendung einer so anfallenden Pigment-Slurry zur Herstellung einer Streichfarbe für die Papierindustrie und/oder für den Masseeinsatz bei der Papierherstellung. Ein wesentliches Element besteht in einem Verfahren zur Wiederverwertung von Füllstoffen und Streichpigmenten der Papier-, Pappe- und Kartonherstellung aus den Restwasserschlämmen der Streichereiabwässer, Deinkinganlagen, innerbetrieblichen Kläranlagen oder Abscheidevorrichtungen, das dadurch gekennzeichnet ist, dass man die Füllstoff- und Streichpigment-haltigen Restwasserschlämme der Vermischung und anschließend der Vermahlung zu einer Pigment-Slurry mit Frischpigment oder Frischfüllstoff als Pulver, frischpigmenthaltige und/oder frischfüllstoffhaltige Slurry zuführt.

In der WO 02/090651 A1 wird ein Verfahren zur Wiederverwertung von Spuckstoff der Papier-, Pappe- und Kartonherstellung sowie dessen Verwendung zur Herstellung von Papier in der Papiermasse oder als Streichfarbe für die Papierindustrie beschrieben.

In der WO 2005/111153 A1 werden oberflächenmodifizierte anorganische Füllstoffe und Pigmente beschrieben. Gegenstand der Druckschrift ist ein Verfahren von oberflächenmodifizierten anorganischen Füllstoffen oder Pigmenten gewünschter Korngröße das dadurch gekennzeichnet ist, dass man Füllstoff- oder Pigment-Slurries von anorganischen Füllstoffen oder Pigmenten unter Einwirkung von Druck- und Scherkräften unter Einsatz von Polymerdispersionen auf die gewünschte Korngröße vermahlt, wobei man die Füllstoffe und/oder Pigmente weiterhin mit an sich bekannten Mahlhilfsmitteln und/oder Dispergiermitteln (Wirksubstanz) in einer Menge von 0,1 bis 2,0 Gew.-%, bezogen auf die Füllstoffe oder Pigmente, in Kontakt bringt, die so erhaltenden Füllstoffe und Pigmente und ihre Verwendung zur Herstellung von Dispersionsfarben, Klebstoffen, Beschichtungen oder Streichfarben für die Papierindustrie, insbesondere von Streichfarben für verschiedene Segmente, wie Bogenoffset, Rollenoffset, Tiefdruck, Karton und Spezialpapiere.

Auf die vorgenannten drei Anmeldungen wird in vollem Umfang Bezug genommen und deren Inhalt hiermit zum Bestandteil der Offenbarung der vorliegenden Erfindung.

In den EP 1 764 345 A1, EP 1 764 346 A1 und EP1 764 347 A1 wird ein Verfahren zur Covermahlung von natürlichem Calciumcarbonat (GCC) und gefälltem (präzipitiertem) Carbonat (PCC), sowie die so erhaltenden Produkte und ihre Verwendung beschrieben. Die erhaltenden Produkte werden durch unterschiedliche Parameter die die ET-Oberfläche, die die Definition der verwendeten Mahlkugeln und den so genannten Steilheitsfaktor gekennzeichnet.

Es ist bekannt, Calciumcarbonat in der Papierindustrie als Bestandteil für die Papiermasse sowie in der Streichfarbe einzusetzen um sowohl die Bedruckbarkeitseigenschaften als auch die optischen Eigenschaften des Endprodukts wie Glanz, Opazität und Helligkeit zu verbessern. Bekanntermaßen kommt Calciumcarbonat in zwei verschiedenen Arten vor, nämlich als gemahlenes oder natürliches Calciumcarbonat, das üblicherweise als GCC bezeichnet wird und als synthetisches oder gefälltes (präzipitiertes) Calciumcarbonat, das üblicher Weise als PCC bezeichnet wird.

GCC ist ein Calciumcarbonat, das aus natürlichen Quellen gewonnen wird. Besonders sind hier Kalkstein, Marmor oder Kreide zu erwähnen. Dieses GCC wird üblicher Weise durch Vermahlung auf die gewünschte Korngröße gebracht. PCC hingegen ist ein synthetisches Material, das üblicherweise durch eine Fällungsreaktion in Anwesenheit von Kohlendioxid aus Calciumhydroxid in wässriger Suspension gewonnen wird. Die Kristalliteigenschaften von GCC und PCC unterscheiden sich deutlich, wie aus der EP 1 764 345 A1 bekannt ist. Hier wird auch weiterer Stand der Technik referiert, der die Unterschiede zwischen GCC und PCC beleuchtet.

Wesentlicher Kern der drei genannten EP-Veröffentlichungen und des darin genannten Standes der Technik, insbesondere der EP 0894836 A1, ist das Covermahlen von GCC und PCC in einer wässrigen Slurry, die neben Wasser, den beiden Calciumcarbonaten gegebenenfalls auch Dispergiermittel enthält. Wesentliches Merkmal der vorgenannten Schriften ist die Herstellung eines Calciumcarbonat-enthaltenden Pigments mit einer definierten Teilchengrößenverteilung.

So wird in der EP 0894836 A1 eine Teilchengrößenverteilung und Mahlung angegeben, bei der 80 bis 99 Gew.-% kleiner 2µm, 50 bis 90 Gew.-% kleiner als 1µm und 0 bis 10 Gew.-% kleiner als 0,2µm sein soll.

In den EP 1 764 345 A1, EP 1 764 346 A1 und EP 1 764 347 A1 wird die Teilchengrößenverteilung dahingehend definiert, dass diese eine Fraktion von Teilchen kleiner als 1µm von mehr als 80%, insbesondere mehr als 85%, weiter bevorzugt von mehr als 90% und noch weiter bevorzugt von 95% aufweisen soll. Aufgrund dieser sehr geringen Teilchengröße von weniger als 1µm ist dieses Material für die Anwendung als Streichfarbe weniger geeignet, da die kleinen Füllstoffteilchen beim Auftragen auf das Papier in die Papiermasse diffundieren und so nur zu einem geringen Teil zur Verbesserung der optischen Eigenschaften des Papiers beitragen können.

Demgegenüber besteht die Aufgabe der vorliegenden Erfindung darin, mit Hilfe eines neuen Verfahrens Streichfarbendispersionen zum Einsatz in der Papierindustrie durch Covermahlung von natürlichem Calciumcarbonat (GCC) und präzipitiertem Calciumcarbonat (PCC) zur Verfügung zu stellen, das gegenüber dem Stand der Technik ein verbessertes Laufverhalten auf der Streichmaschine und verbesserte optische Eigenschaften des Papiers aufweist.

Die vorgenannte Aufgabe wird in einer ersten Ausführungsform gelöst durch ein Verfahren zur Herstellung von Streichfarbendispersionen zum Einsatz in der Papierindustrie durch Covermahlung von natürlichem Calciumcarbonat (GCC) und präzipitiertem Calciumcarbonat (PCC), das dadurch gekennzeichnet ist, dass man pulverförmiges GCC mit einer 5 bis 80 Gew. % PCC enthaltenden Slurry zu einer Teilchengrößenverteilung des Calciumcarbonats von wenigstens 90 Gew. % kleiner 5 µm, wenigstens 70 Gew. % kleiner 2 µm und wenigstens 20 Gew. % kleiner 1 µm mit einem Gewichtsmittel der Teilchengrößen im Bereich von 0,7 bis 3 µm covermahlt.

Mit Hilfe der vorliegenden Erfindung, d.h. durch die Covermahlung konnten die Schwächen der einen Komponente (GCC oder PCC) durch Stärken der anderen Komponente (PCC oder GCC) nahezu beliebig reduziert oder gar vollständig ausgeschaltet werden. Dies gilt insbesondere für die High-shear-Viskosität, das Bleeding, den Bladedruck, die Glanzentwicklung, den Druckfarbenverbrauch, die Opazität sowie die Tiefdruckeignung. Die Verwendung von pulverförmigem GCC bei der Herstellung von Streichfarben erlaubt ein kostengünstiges Verfahren bei der PCC-Herstellung, da die äußerst energieaufwändige Aufkonzentrierung/Trocknung, die üblicherweise beim Einsatz von PCC erforderlich ist, mehr oder weniger vollständig entfallen kann. Bekanntermaßen fallen übliche PCC-Slurries bei der Präzipitation in einer Größenordnung von 10 bis 20 Gew.-% PCC auf und müssen daher für den Einsatz in üblichen Streichfarben auf 60 bis 75 Gew.-% aufkonzentriert werden. Hiermit ist ein extrem hoher Energieverbrauch erforderlich. Andererseits wird durch den erfindungsgemäßen Einsatz von pulverförmigem GCC der Energieverbrauch drastisch gesenkt, da je nach den entsprechenden Anforderungen die Aufkonzentrierung/ Trocknung von PCC-Slurries entweder teilweise oder vollständig entfallen kann.

Erfindungsgemäß wurde das Laufverhalten auf der Streichmaschine anhand der Viskositätsdaten untersucht. Es wurde festgestellt, dass der Klingenanpressdruck bei dem Einsatz von PCC allein sehr hoch ist, während GCC allein einen geringeren Anpressdruck erfordert. Beim Einsatz von Covermahlungen von PCC und GCC wird dieser notwendige Klingendruck zwar etwas höher, ändert sich jedoch nicht wesentlich von dem der von GCC allein erforderlich ist.

Aufgrund der speziellen Kristallstruktur von PCC wird dieses häufig in der Papiermasse eingesetzt, während GCC eine hervorragende Oberflächenbelegung ergibt und damit überwiegend in Streichfarben eingesetzt wird. Mit Hilfe der vorliegenden Erfindung konnte gefunden werden, dass die covermahlenen PCC- und GCC-Slurries eine deutliche Verbesserung gegenüber den Ausgangsmaterialien darstellt.

Die Highshear-Viskosität, die bedingt durch den Einsatz von PCC allein sehr hoch ist, wird durch covermahlene PCC- und GCC-Kombinationen in den Bereich von GCC allein verschoben.

Bekanntermaßen ergibt PCC allein die höchsten Werte der Glanzentwicklung, während GCC allein einen niedrigeren Glanz bewirkt. Die erfindungsgemäß covermahlenen GCC- und PCC-Kombinationen liegen in der Glanzentwicklung dazwischen.

Beim Druckfarbenverbrauch ist bekannt, dass GCC allein für den höchsten Verbrauch steht, während PCC allein für den geringsten Verbrauch steht. Erfindungsgemäß wurde festgestellt, dass der Druckfarbenverbrauch von PCC- und GCC-covermahlenen Slurries nur wenig höher als der von PCC allein ist.

Aus dem Stand der Technik ist bekannt, dass GCC allein die niedrigsten Werte für die Opazität liefert, während PCC allein die höchsten Werte liefert. Erfindungsgemäße covermahlene Kombinationen aus GCC und PCC fallen in Bezug auf die Opazität besser aus, als GCC allein.

Bei der Tiefdruckeignung wird die Anzahl von Druckfehlstellen untersucht. GCC allein liefert üblicherweise die höchste Anzahl von Fehlstellen, während PCC allein die geringste Anzahl an Fehlstellen liefert. Die erfindungsgemäß covermahlene Kombination ist deutlich besser als GCC allein.

Die erfindungsgemäß hergestellten covermahlenen Produkte könnte man als Kombicarbonate bezeichnen. Die Kombination eröffnet eine breite Flexibilität und die Möglichkeit der Herstellung von maßgeschneiderten Produkten mit bestmöglichem Eigenschaftsprofil direkt vor Ort.

Das Vermahlungskonzept könnte beispielsweise dahingehend variiert werden:
A: PCC Typ X + GCC Calcicell^{®} 30,
B: PCC Typ Y + GCC Calcicell^{®} 30,
C: PCC Typ X/Y + Calcicell^{®} 30 + Streichfarben- bzw. Cleanerrejekte

Das Eigenschaftsprofil von covermahlenem PCC-GCC in Kombinationen ist besser als PCC-GCC-Mischungen und kann durch die Zuführung von Streichfarben- bzw. Cleanerrejekten noch weiter optimiert werden.

Im Einzelnen konnten nachstehende Streichfarben- sowie Stricheigenschaften wie folgt verbessert werden:

### A) Laufverhalten (runnability)

### A1) Bladedruck/Klingenanpressdruck (Benotung jeweils: hoher Druck = schlecht (6), niedriger Druck = gut (1))

### a) Endqualität: Deckstrich, Pigment 90% < 2µm

| | bei 900m/min Streichgeschwindigkeit | Note |
|---|---|---|
| 1 | Standard | 1 |
| 3 | PCC allein | 5 |
| 2 | PCC + GCC (75+25) covermahlen | 1,5 |
| 4 | PCC + GCC (75+25) gemischt | 2,5 |

### b) Endqualität: Vorstrich, Pigment 60% < 2µm

| | bei 1400m/min Streichgeschwindigkeit | Note |
|---|---|---|
| 1 | Standard | 1 |
| 4 | PCC allein | 3 |
| 3 | PCC + GCC (75+25) covermahlen | 2 |
| 2 | PCC + GCC (25+75) covermahlen | 1-2 |
| 6 | PCC + GCC (75+25) gemischt | 1-2 |

### A2) "Bleeding" = Stalagmitenbildung

(Benotung jeweils: kein = Note 1, sehr stark = Note 6)

### a) Endqualität: Deckstrich, Pigment 90% < 2µm

| | bei 800m/min Streichgeschwindigkeit | Note |
|---|---|---|
| 1 | Standard | 1/1,5 |
| 3 | PCC allein | 1,5/1,5 |
| 2 | PCC + GCC (75+25) covermahlen | 1/1 |
| 4 | PCC + GCC (75+25) gemischt | 1/1 |

### b) Endqualität: Vorstrich, Pigment 60% < 2µm

| | bei 1400m/min Streichgeschwindigkeit | Note |
|---|---|---|
| 1 | Standard | 1/1 |
| 4 | PCC allein | 6/6 |
| 3 | PCC + GCC (75+25) covermahlen | 1/1 |
| 2 | PCC + GCC (25+75) covermahlen | 1/1 |
| 6 | PCC + GCC (75+25) gemischt | 1,5/2 |

### A3) Viskosität

High-shear-Viskosität -> Kapillarviskosimeter

Scherkräfte 360.000 -> 1.500.000 1/sec

### a) Endqualität Vor- oder Mattstrich = Pigment 60% < 2µm

| Vergleich der Streichfarben | | Visk. Bereich mPa•s |
|---|---|---|
| No.6 | 100% Standard GCC 60 | 35-25 |
| No.9 | 100% PCC Typ X | 70-77 |
| No.7 | 25% PCC Typ Y + 75% GCC-> covermahlen | 26-31 |
| No.8 | 75% PCC Typ Y + 25% GCC -> covermahlen | 34-41 |
| No.10 | 25% PCC Typ X + 75% GCC -> gemischt | 30-38 |
| No.11 | 25% PCC Typ Y + 75% GCC -> gemischt | 30-38 |
| | | |
| No. 6 | GCC allein: sehr niedrige Viskosität | |
| No. 9 | PCC allein: sehr hohe Viskosität | |
| No. 10 und 11: | Bei Mischungen PCC/GCC geht Viskosität zurück | |
| No. 7 | Durch Covermahlung von PCC/GCC wird die Viskosität weiter reduziert | |

### b) Endqualität für Deckstrich, Pigment 90% < 2µm

| Vergleich der Streichfarben | | Visk. Bereich |
|---|---|---|
| | | mPa•s |
| No. 2 | 100% Standard GCC 90 | 26-34 |
| No. 4 | 100% PCC Typ Y | 52-61 |
| No. 3 | 75% PCC Typ X + 25% GCC, covermahlen | 28-32 |
| No. 5 | 75% PCC Typ X + 25% GCC, gemischt | 47-54 |

Durch Mischen von PCC und GCC wird gegenüber PCC allein die Viskosität geringfügig verringert.

Durch Covermahlung, selbst mit nur 25% GCC-Anteil wird die Viskosität deutlich abgesenkt, und zwar praktisch auf das Niveau von GCC allein.

### B) Satinierbarkeit -> Glanzentwicklung gemessen "on-line" im Kalander, Angaben in %

### Endqualität: Deckstriche, Pigment90% < 2µm

| | bei 12g/m² Strichauftrag | Glanz % |
|---|---|---|
| 1 | Standard | 37/40 |
| 4 | PCC allein | 64/65 |
| 3 | PCC + GCC (75+25) covermahlen | 47/52 |
| 2 | PCC + GCC (25+75) covermahlen | 40/43 |
| 6 | PCC + GCC (25+75) gemischt | 40/43 |

### C) Druckfarbenverbrauch um gleiche Farbintensität zu erhalten am Beispiel des 1. Druckwerks

Endqualität: Vor- oder Mattstrich, Pigment 60% < 2µm bei 15 bzw. 12 g/m² Strichauftrag

| | | Geschw. der Farbwalze % |
|---|---|---|
| 1 | Standard | 18/20 |
| 4 | PCC allein | 12/13 |
| 3 | PCC + GCC (75+25) covermahlen | 15/18 |
| 2 | PCC + GCC (25+75) covermahlen | 16/18 |
| 6 | PCC + GCC (25+75) gemischt | 18/18 |

### D) Opazität (Deckkraft in %)

Endqualität: Vor- bzw. Mattstriche, Pigment 60% < 2µm bei 12 bzw. 15 g/m² Strichauftrag

| | | Opazität % |
|---|---|---|
| 1 | Standard | 91/91,5 |
| 4 | PCC allein | 92,7/93,3 |
| 3 | PCC + GCC (75+25) covermahlen | 91,7/92,3 |
| 2 | PCC + GCC (25+75) covermahlen | 91,6/92,0 |
| 6 | PCC + GCC (25+75) gemischt | 91,0/91,3 |

### E) Tiefdruckeignung

Gezählt wurden sog. "missing dots" (m.d.), d.h. Fehlstellen im Druck auf einer bestimmten Fläche Endqualität: Mattstrich, Pigment 60% < 2µm

| | Strichgew. 12 g/m² | Anzahl m.d. |
|---|---|---|
| 1 | Standard | 43 |
| 4 | PCC allein | 14 |
| 3 | PCC + GCC (75+25) covermahlen | 32 |
| 2 | PCC + GCC (25+75) covermahlen | 34 |
| 6 | PCC + GCC (25+75) gemischt | 42 |

Vorteile der Covermahlung von PCC-Slurry mit pulverförmigem GCC in Bezug auf die Herstellung von hochkonzentrierten Pigmentsuspensionen:
In der Papierstreichindustrie werden Streichfarben mit möglichst hohem Feststoffgehalten bis hin zu 68 Gew.-% gefordert um möglichst wenig Energie zur Strichtrocknung aufwenden zu müssen. Da Bindemittel und andere Streichfarbenadditive Trockengehalte von max. 50 Gew.-% bzw. deutlich weniger aufweisen, müssen die Pigmentsuspensionen deshalb mit sehr hohen Feststoffkonzentrationen hergestellt werden, die bei Calciumcarbonatslurries aus GCC üblicherweise 75 bis 78 Gew.-% erreichen.

Bei der Herstellung von Mischungen aus GCC- und PCC-Slurries müssten deshalb beide Komponenten diesen hohen Trockengehalt aufweisen. PCC-Slurries fallen aber üblicherweise mit nur etwa 20% Trockengehalt an und müssen daher aufwändig aufkonzentriert werden.

Bei der Covermahlung von GCC-Pulver mit PCC-Slurry können dagegen die Trockengehalte der PCC-Slurries deutlich geringer sein.

Der notwendige Feststoffgehalt der PCC-Slurries bei dem Covermahlungsprozess richtet sich naturgemäß nach dem Einsatzverhältnis von pulverförmigem GCC zu PCC-Slurry. Je höher die Anteile an pulverförmigem GCC sind, desto niedriger kann der Feststoffgehalt der PCC-Slurry sein.

Wird andererseits das Verhältnis von GCC zu den PCC-Slurries verschoben, so sind höhere Feststoffkonzentrationen der PCC-Slurries erforderlich. Besonders bevorzugt wird eine PCC-GCC-Slurry eingesetzt, die nur geringe Menge an PCC enthält, da auf diese Weise, wie oben beschrieben, eine große Energiemenge zur Aufkonzentrierung/ Trocknung der PCC- Slurry eingespart werden kann. Dementsprechend ist es im Sinne der vorliegenden Erfindung besonders bevorzugt PCC-GCC-Slurries einzusetzen, die 5 bis 80 Gew. %, insbesondere 10 bis 40 Gew.%, besonders bevorzugt 10 bis 25 Gew. % PCC enthalten.

Damit die Pigmentsuspensionen direkt Eingang in die Papierindustrie finden können, sollte der Feststoffgehalt der Suspensionen sich in dem Rahmen bewegen, der auch von Pigmentsuspensionen des Standes der Technik abgedeckt ist. Damit ist es im Sinne der Erfindung besonders bevorzugt, Pigmentsuspensionen mit einem Feststoffgehalt von wenigstens 50 Gew. %, insbesondere wenigstens 60 Gew. %, besonders bevorzugt wenigstens 70 Gew.% cozuververmahlen. Ist der Feststoffgehalt der Suspensionen zu gering, so sind die Umlaufzeiten in der Regel zu lang, da zu wenig Energieertrag auf die einzelnen Teilchen erfolgt.

Neben dem GCC und PCC können zusätzlich an sich im Stand der Technik bekannte Frischpigmente und/oder Frischfüllstoffe eingesetzt werden. Besonders bevorzugt im Sinne der vorliegenden Erfindung kommen für die Covermahlung Kaolin, künstliche und/oder natürliche Aluminiumsilikate und -oxidhydrate, Satin-Weiß, Dolomit, Glimmer, Metall-, insbesondere Aluminiumflakes, Schichtsilikate, insbesondere Bentonit, Rutil, Magnesiumhydroxid, Gips, Talkum, Aluminiumoxid, Titandioxid, Calciumsilikat sowie sonstige Steine und Erden jeweils allein oder deren Gemische in Frage.

In einer weiteren Ausführungsform der vorliegenden Erfindung werden während der Covermahlung neben den Pigmenten auch Polymerdispersionen eingesetzt. Der Einsatz entsprechender Polymerdispersionen ist beispielsweise aus der WO 2005/111153 bekannt. Auch im Rahmen der vorliegenden Erfindung zeigen diese Polymerdispersionen die Eigenschaft, dass sie nicht zu einem Verkleben oder Agglomerieren der Streichfarbenteilchen führen, sondern auch hier offenbar einen feinen Film auf der Oberfläche der Pigmente bilden, die eine sehr viel bessere Haftung untereinander und zum Substrat, beispielsweise Fasern in der Papierindustrie aufweisen. Die Herkunft dieser Polymerdispersionen kann dabei entweder aus neuen Einsatzmaterialien, aber auch aus Restwasserschlämmen stammen.

Beim Aufbringen der Streichfarbensuspensionen in der Papierherstellung wandert üblicherweise ein hoher Anteil des Bindemittels in die Papieroberfläche ab. Ein großer Teil des Bindemittels schlägt in das Rohpapier weg, bevor es zur Verfilmung kommt. Die oberste Streichschicht verarmt an Bindemittel und es kommt zum so genannten Rupfen. Wird jedoch das Polymerbindemittel mit den Streichfarben covermahlen, tritt die Migration des Bindemittels nicht oder nur in geringem Maße ein; d.h. die Offsetfestigkeit (Widerstand gegen das Rupfen) ist höher, weil kein (oder wenig) Bindemittel durch Wegschlagen verloren geht.

Polymerdispersionen im Sinne der vorliegenden Erfindung umfassen alle Dispersionen (Latices) von feinverteilten natürlichen und oder synthetischen Polymeren, insbesondere in einer Teilchengröße von 0,05 bis 6 µm. Üblicherweise liegen diese in Form von wässrigen, seltener nichtwässrigen Dispersionen vor. Eingeschlossen sind damit Dispersionen von Polymeren wie Natur(-Kautschuklatex) und Synthesekautschuk (Syntheselatex), als auch von Kunstharzen (Kunstharzdispersionen) und Kunststoffen (Kunststoffdispersionen) wie Polymerisaten, Polykondensaten und Polyadditonsverbindungen, insbesondere auf der Basis von Polyurethan, Styrol/Butadien, Styrol/Acrylsäure oder -ester, Styrol/Butadien/Acrylsäure oder -ester sowie Vinylacetat/Acrylsäure oder -ester sowie Acrylnitril-haltigen Dispersionen.

Solche Dispersionen sind beispielsweise unter den Produktbezeichnungen Basonal^{®}, Acronal^{®} und Styronal^{®} als Bindemittel für die Dispersionsfarbenindustrie und auch für die Papier- und Kartonstreicherei im Handel erhältlich. Diese Polymerdispersionen werden im Stand der Technik ohne stärkere Scherung durch Rühren in die üblicherweise neutral bis alkalisch eingestellten Füllstoff- oder Pigment-Slurries eingearbeitet, ohne dass hier eine Veränderung der Korngröße der Füllstoffteilchen oder Pigmentteilchen eintritt. Im Sinne der vorliegenden Erfindung werden diese jedoch direkt mit den anorganischen Pigmenten durch Einwirkung von Druck- und Scherkräften in Kontakt gebracht. Unter Einwirkung von Druck- und Scherkräften beim Vermahlen werden oberflächenmodifizierte anorganische Pigmente erhalten, die eine verbesserte Bindewirkung gegenüber dem Stand der Technik aufweisen. Besonders bevorzugt im Sinne der vorliegenden Erfindung ist es, die anorganischen Pigmente in Anwesenheit der Polymerdispersionen auf die gewünschte Korngröße, nass zu vermahlen. Somit ist es möglich, bei weißen Füllstoffen oder Pigmenten eine große Variation der Weiße- und Größen-Verteilung der Pigmente herzustellen, wobei diese Variation insbesondere durch die Art und Dauer der Vermahlung gesteuert werden kann.

Die Menge der Polymerdispersionen, die mit den anorganischen Pigmenten in Kontakt gebracht wird, ist von einer gewissen Bedeutung. So ist es im Sinne der vorliegenden Erfindung besonders bevorzugt, die anorganischen Pigmente mit einer Menge von 0,1 bis 50, insbesondere 5 bis 15 Gew.-% Polymerdispersion (Feststoffe), bezogen auf die Menge an Pigment in Kontakt zu bringen. Die Polymerdispersionen liegen üblicherweise in wässriger oder nichtwässriger Form mit einem Feststoffgehalt von 40 bis 60 Gew.-%, insbesondere 50 Gew.-% vor.

Neben den Polymerdispersionen bringt man im Sinne der vorliegenden Erfindung weiterhin die anorganischen Pigmente mit an sich bekannten Dispergiermitteln oder Mahlhilfsmitteln, insbesondere Polyacrylaten in Kontakt. Derartige Polyacrylate sind beispielsweise in der eingangs erwähnten EP 0 515 928 B1 beschrieben, auf die insoweit voll inhaltlich Bezug genommen wird.

Im Sinne der vorliegenden Erfindung bringt man die Füllstoffe oder Pigmente mit oben genannter Dispergiermittelwirksubstanz in einer Menge von 0,01 bis 3,0, besonders bevorzugt 0,2 bis 0,4 Gew.-%, bezogen auf die Festsubstanz in Kontakt.

In den Restwasserschlämmen der Streichereiabwässer der Papier- und Deinkinganlagen, innerbetrieblichen Anlagen oder Abscheidevorrichtungen liegen die Streichpigmente häufig in agglomerierter Form und mit geringerer Weiße vor, die eine direkte Wiederverwendung in der Rohstoffaufbereitung, insbesondere im Papierstrich, einschränkt oder sogar unmöglich macht.

Mit Hilfe der vorliegenden Erfindung des oben beschriebenen Verfahrens wird eine definierte, konzentrierte Pigment-Slurry auch unter Einsatz von Restwasserschlämmen erhalten, die zum Beispiel in der Papier-, Pappe- und Kartonherstellung eingesetzt werden kann.

Ein Teil oder die gesamte Menge des notwendigen Wassers zur Vermahlung der anorganischen Pigmente kann durch die Restwasserschlämme ersetzt werden kann. Üblicherweise in den Restwasserschlämmen vorliegende Agglomerate der Pigmente stören hierbei nicht oder wenig, da diese im Verlauf des Mahlprozesses auf die gewünschten Korngrößen zerkleinert werden.

Die Pigmentteilchen des Restwasserschlamms, die zum Einsatz als Pigment vorgesehen sind, wirken hierbei als Mahlhilfsmittel und Dispergierhilfsmittel für die Zerstörung der Agglomerate bei dem Mahlprozess. Gleichzeitig wirkt der Restwasserschlamm inklusive der beladenen Partikel als Dispergierhilfsmittel und Mahlhilfsmittel für die zugesetzten Füllstoffe und Pigmente bei dem Mahlprozess, so dass die an sich üblichen Mengen an Bindemitteln, Dispergierhilfsmitteln und Mahlhilfsmitteln erfindungsgemäß verringert werden können.

Dementsprechend ist es erfindungsgemäß besonders bevorzugt, den Restwasserschlamm mit einer Feststoffkonzentration von 0,02 Gew.-% bis 60 Gew.-%, insbesondere 1 Gew.-% bis 30 Gew.-% zur Vermischung und anschließender Vermahlung mit Polymerdispersion, Frischpigment oder Frischfüllstoff als Pulver bzw. frischpigmenthaltige und/oder frischfüllstoffhaltige Slurry einzustellen. Bei einer zu geringen Konzentration wird das Wiederverwertungsverfahren unwirtschaftlich.

In den Restwasserschlämmen der Papierindustrie kann das Verhältnis von Füllstoffen und/oder Pigmenten zu Fasern in einer großen Bandbreite variieren. Besonders bevorzugt ist es im Sinne der vorliegenden Erfindung, Restwasserschlämme mit einer gegebenenfalls angereicherten Konzentration an Füllstoffen und/oder Pigmenten einzusetzen, die im Bereich von 1 Gew.-% bis 80 Gew.-%, insbesondere 20 Gew.-% bis 60 Gew.-% bezogen auf den Feststoffgehalt liegt. So kann der Faseranteil einerseits oder der Füllstoff- und/oder Pigmentanteil andererseits beispielsweise von 2 bis 98 Gew.-% oder 98 bis 2 Gew.-% variieren. Auch in der Papierindustrie sind selbstverständlich Faser-freie Restwasserschlämme erfindungsgemäß einsetzbar.

Beispielhaft seien hier die bevorzugten Zusammensetzungen verschiedener Restwasser- oder Abwasserschlämme erläutert. Vorzugsweise umfasst das Abwasser aus der Produktion 0,5 bis 5 Gew.-%, insbesondere 2,5 Gew.-% Stoffverlust bei einem speziellen Frischwasserbedarf von 10 bis 100 I/kg, insbesondere 20 I/kg. Die Konzentration der Restwasserschlämme beträgt vorzugsweise 0,02 bis 5,0, insbesondere 1,5 Gew.-%. Besonders bevorzugt im Sinne der Erfindung ist hier ein Mengenverhältnis von Faseranteil zu Füllstoff und/oder Pigmentanteil von 20 zu 80 Gew.-% oder 80 zu 20 Gew.-%, insbesondere Fasern zu Pigment im Verhältnis 40 zu 60 Gew.-% eines Abwassers aus der Papier-Produktion.

Dies erlaubt eine flexible und schnelle Reaktion auf Qualitäts- und Produktionsanforderungen, beispielsweise der verschiedenen Papierrohstoffe für die Papiermasse, die Füllstoffe oder Pigmente oder Slurries für den Vorstrich, Deckstrich und Einfachstrich oder die Pigmentierung allein, sowie die Vermischung mit anderen Füllstoffen oder Pigmenten.

Im Sinne der vorliegenden Erfindung können an sich bekannte Additive wie Netzmittel, Stabilisierungsmittel, Mahlhilfsmittel und Dispergierhilfsmittel während der Vermischung und/oder der Vermahlung der anorganischen Füllstoffe und Pigmente eingesetzt werden.

Die mit Hilfe der vorliegenden Erfindung erhältlichen Pigment-Slurries können besonders vorteilhaft in der Papierindustrie, insbesondere zur Herstellung einer Streichfarbe für den Papierstrich oder in der Papiermasse eingesetzt werden. Besonders bevorzugt ist die Verwendung zur Herstellung einer Streichpigment-Slurry für Offsetpapier. Darüber hinaus eignen sich die erfindungsgemäßen Slurries auch zur Herstellung einer Streichfarbe für leichtgewichtige, gestrichene Papiere, insbesondere auch bei hoher Auftragsgeschwindigkeit, sowie zur Herstellung von Rollen-Offsetpapieren, insbesondere zur Herstellung von leichtgewichtig, gestrichenen Rollen-Offsetpapieren, das Streichen von Karton und Spezialpapier, wie Etiketten, Tapeten, Silikonrohpapier, Selbstdurchschreibpapiere, Verpackungspapiere, sowie der Beimischung bei Tiefdruckpapieren. In diesem Sinne sind die erfindungsgemäß erhältlichen Streichpigment-Slurries, insbesondere einsetzbar im Bogenoffset, insbesondere für den Bogenoffset-Einfachstrich, Bogenoffset-Doppelstrich: Bogenoffset-Vorstrich und Bogenoffset-Deckstrich; - im Rollenoffset, insbesondere für den LWC-Rollenoffset-Einfachstrich, Rollenoffset-Doppelstrich: Rollenoffset-Vorstrich und Rollenoffset-Deckstrich; - im Tiefdruck, insbesondere für den LWC-Tiefdruck-Einfachstrich, Tiefdruck-Doppelstrich: Tiefdruck-Vorstrich und Tiefdruck-Deckstrich; - im Karton, insbesondere für den Karton-Mehrfachstrich: Karton-Vorstrich und Karton-Deckstrich sowie Flexo-Druck und für Spezialpapiere, insbesondere für Etiketten und flexible Verpackungen. Die erfindungsgemäßen Füllstoffe und Pigmente können auch in Papier für digitale Druckverfahren vorteilhaft eingesetzt werden.

Das Verfahren bietet die Möglichkeit, die erfindungsgemäß hergestellten Pigment-Slurries ohne Qualitätseinbuße bei den damit hergestellten Rohpapieren, Strichen und insbesondere den Endqualitäten einzusetzen.

Bedingt durch den Energieeintrag erhöht sich die Temperatur bei der Covermahlung selbstständig. Insbesondere zur Filmbildung der Polymerdispersionen ist es erfindungsgemäß besonders bevorzugt, die Covermahlung bei einer Temperatur von wenigstens 50°C durchzuführen. Die Covermahlung wird vorzugsweise in Anwesenheit von Mahlkugeln mit einem Äquivalentdurchmesser von bis zu 5 mm, insbesondere im Bereich von 0,2 mm bis 2 mm durchgeführt. Wie aus der Literatur bekannt ist, eignen sich hierfür insbesondere mit Ceroxid und/oder Yttriumoxid stabilisierte Zirkoniumdioxidmahlkugeln.

Eine weitere Ausführungsform der vorliegenden Erfindung betrifft die mit Hilfe des vorliegenden Verfahrens erhältlichen Streichfarbendispersionen.

Diese Streichfarbendispersionen werden erfindungsgemäß in einer weiteren Ausführungsform zur Herstellung von Streichfarben in der Papierindustrie, insbesondere von Beschichtungen oder für verschiedene Segmente der Papierindustrie wie Bogenoffset, Rollenoffset, Tiefdruck, Karton und Spezialpapiere eingesetzt.

## Patentansprüche

1. Verfahren zur Herstellung von Streichfarbendispersionen zum Einsatz in der Papierindustrie durch Covermahlung von natürlichem Calciumcarbonat (GCC) und präzipitiertem Calciumcarbonat (PCC), **dadurch gekennzeichnet, dass** man pulverförmiges GCC mit einer 5 bis 80 Gew. % PCC enthaltenden Slurry zu einer Teilchengrößenverteilung des Calciumcarbonats von wenigstens 90 Gew. % kleiner 5 µm, wenigstens 70 Gew. % kleiner 2 µm und wenigstens 20 Gew. % kleiner 1 µm mit einem Gewichtsmittel der Teilchengrößen im Bereich von 0,7 bis 3 µm covermahlt.

2. Verfahren nach Anspruch 1, **dadurch gekennzeichnet, dass** man eine PCC enthaltende Slurry einsetzt, die 10 bis 40 Gew. %, insbesondere 10 bis 25 Gew. % PCC enthält.

3. Verfahren nach Anspruch 1 oder 2, **dadurch gekennzeichnet, dass** man eine Suspension mit einem Feststoffgehalt von wenigstens 50 Gew. %, insbesondere wenigstens 60 Gew. % covermahlt.

4. Verfahren nach einem der Ansprüche 1 bis 3, **dadurch gekennzeichnet, dass** man die Covermahlung in Anwesenheit von Kaolin, künstlichen und/oder natürlichen Aluminiumsilikaten und - oxidhydraten, Satin-Weiß, Dolomit, Glimmer, Metall-, insbesondere Aluminiumflakes, Schichtsilikaten, insbesondere Bentonit, Rutil, Magnesiumhydroxid, Gips, Talkum, Aluminiumoxid, Titandioxid, Calciumsilikat sowie sonstige Steine und Erden jeweils allein oder deren Gemische durchführt.

5. Verfahren nach einem der Ansprüche 1 bis 4, **dadurch gekennzeichnet, dass** man während der Covermahlung Polymerdispersionen einsetzt, enthaltend Harze, die ausgewählt sind aus Naturkautschuk, Synthesekautschuk, Kunstharzen und Kunststoffen, insbesondere auf der Basis von Polyurethan, Styrol/ Butadien, Styrol/ Acrylsäure oder -ester, Styrol/ Butadien/ Acrylsäure oder -ester sowie Vinylacetat/ Acrylsäure oder -ester.

6. Verfahren nach einem der Ansprüche 1 bis 5, **dadurch gekennzeichnet, dass** man die Covermahlung in Anwesenheit von streichpigmenthaltigen Restwasserschlämmen der Streichereiabwässer, Deinkinganlagen, innerbetrieblichen Kläranlagen, oder Abscheidevorrichtungen von Papier-, Farben-, Klebstoff- und sonstigen Fabriken durchführt.

7. Verfahren nach einem der Ansprüche 1 bis 6, **dadurch gekennzeichnet, dass** man die Covermahlung bei einer Temperatur von wenigstens 50 °C durchführt.

8. Verfahren nach einem der Ansprüche 1 bis 7, **dadurch gekennzeichnet, dass** man die Covermahlung in einer Vertikalkugelmühle durchführt.

9. Verfahren nach einem der Ansprüche 1 bis 8, **dadurch gekennzeichnet, dass** man die Covermahlung in Anwesenheit von Mahlkugeln mit einem Äquivalentdurchmesser von bis zu 5 mm, insbesondere im Bereich von 0,2 mm bis 2 mm durchführt.

10. Verfahren nach Anspruch 9, **dadurch gekennzeichnet, dass** man Mahlkugeln aus Zirkoniumoxid einsetzt, die insbesondere einen Gehalt an Yttriumoxid und/oder Ceroxid aufweisen.

11. Streichfarbendispersion erhältlich nach einem Verfahren der Ansprüche 1 bis 10.

12. Verwendung der Streichfarbendispersionen nach Anspruch 11 zur Herstellung von Streichfarben in der Papierindustrie, insbesondere von Beschichtungen oder für verschiedene Segmente der Papierindustrie, wie Bogenoffset, Rollenoffset, Tiefdruck, Karton und Spezialpapiere.
